# EUROPEAN PATENT APPLICATION

(11) **EP 2 335 496 A1**
(43) Date of publication of application: **22.06.2011**
(21) Application number: 09178476.9
(22) Date of filing: 09.12.2009
(51) Int. Cl.: A23L 1/03, A23L 1/0524, A23L 1/0526, A23L 1/0562, A23L 2/54

(54) **Carbonated fermented jellified food product**

(71) Applicant: Nestec S.A., 1800 Vevey (CH)
(72) Inventor: Cauneille, Marie-Line, 14100, BEUVILLERS (FR); Chevalier, Jean-François, 14100, COURTONNE LA MEURDRAC (FR); Marcilla, Rafael, 14100, LISIEUX (FR)

(57) **Abstract**

The present invention concerns a carbonated, fermented food product having a gel texture comprising a liquid, a gelling agent selected from pectin, carrageenan, guar, agar, carob, gelatine, and mixtures thereof, a fruit and/or vegetable juice.

## Description

### Field of the invention

The present invention relates to carbonated, yeast fermented food products having a gel texture when poured in a suitable container. In particular, it relates to food products comprising CO₂ and having a gel texture when consumed as a gel food product. The present invention also concerns a process for the preparation of a carbonated, fermented food product having a gel texture.

### Background of the invention

Drinkable gas containing beverages are well known to everybody. Examples of drinkable gas containing beverages are carbonated soft drinks such as lemonades. Further, carbonated milk products are available on the market. In addition, carbonated drinks on the basis of fruit juices and vegetable extracts are also well accepted by the consumers.

The above drinks and beverages are liquid and do not contain any thickening agents. In the meantime, gel-like but still flowable carbonated drinks and beverages have been described. An alcoholic beverage having a light gel structure is described in WO 98/04158. These beverages contain a certain amount of a gelling agent. EP 0796046 B1 describes a carbonated spoonable semi-solid cultured yoghurt product which may contain gums as a thickener.

It is object of the present invention to provide a natural, carbonated, fermented food product having a gel texture with an improved stability to provide a pleasant sparkling mouth-feel upon consuming the food product.

It is a further object of the present invention to provide an economic process for the manufacture of a carbonated, fermented food product having a stable gel texture.

### Summary of the invention

The above objects are solved by means of the independent claims. The dependent claims relate to preferred embodiments of the subject-matter of the independent claims.

Thus, in a first aspect, the invention relates to a carbonated, fermented food product having a gel structure comprising a liquid, gelling agent selected from pectin, carrageenan, guar, agar, carob, gelatin, and mixtures thereof, a fruit and/or vegetable component selected from juice.

The second aspect of the present invention concerns a process for the preparation of a carbonated, fermented food product having a gel texture comprising the steps of:
Mixing a gelling agent, a liquid and a fruit and/or vegetable component and optionally one of sweeteners and flavoring agents; pasteurizing the mixture; adding yeast in an amount of 10⁵ to 10¹⁰ cfu/g, preferably 10⁶ to 10⁸ cfu/g to prepare a yeast containing product; filling the product into containers under non-isobaric conditions; adding 0.01 to 1.0 wt.-%, preferably 0.1 to 0.5 wt.-% of an acid to the product; carrying out a fermentation and cooling down the product to a temperature in the range of 12 °C to 2 °C, preferably 8 °C to 5 °C.

### Brief description of the drawings

Additional features and advantages of the present invention are described in, and will be apparent from, the description of the presently preferred embodiments which are set out below with reference to the drawing in which:

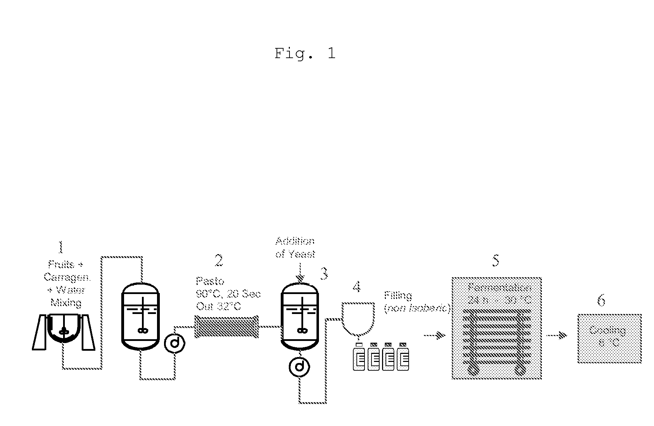

**Figure 1** is a process diagram illustrating a way how to produce the carbonated, fermented food product of the present invention.

### Detailed description of the invention

The food product of the present invention is a naturally carbonated product having a gel texture which is still flowable when sealed in a suitable container such as a bottle, cup, etc. In this condition, the gas bubbles are uniformly distributed (dissolved) in the gel matrix providing a proper absorption of the gas in the food product.

When the bottled gel food product is subjected to a certain type of stress, for example during pouring in another container such as a cup, the CO₂ bubbles in the food product generate a stable mousse which is easily spoonable. Usually, only half of the volume of the containers needs to be filled to obtain a completely filled volume already after a few seconds. The consumers eating this mousse experience a sparkling effect as a very pleasant mouth-feel combined with a freshness aspect.

The carbonated, fermented food product of the present invention comprises a gelling agent to provide the gel characteristic of the product. The gelling agent that is suitable for the food product of the present invention is selected from from pectin, carrageenan, guar, agar, carob, gelatin, and mixtures thereof. The amount of the gelling agent contained in the food product of the present invention is preferably from 0.1 to 5.0 wt.-%, more preferably 0.1 to 1.0 wt.-%, with a range of 0.1 to 0.5 wt.-% being most preferred. In a preferred embodiment of the invention, a mixture of carrageenan and guar is used.

The viscosity of the product at atmospheric pressure, when poured into a cup, glass or similar container suitable for consumption, is comprised between 10 and 300000 mPa.s, preferably between 100 and 10000 mPa.s. The product has therefore the properties of a semi-viscous, viscous, or hard gel, and it can therefore be envisaged to dispense it by pouring action into a glass, by sipping it through a straw for instance, or by spooning it in the case of a harder gel (less preferred). It can also be envisaged to include the gel fermented product according to the invention as an element of a more complex product like a multilayer dessert, or a food product comprising inclusions of fermented gel product.

The majority of the carbonated, fermented food product of the present invention consists of a liquid base which can be any liquid suitable for forming a gel food product. Preferably, the liquid base is selected from water, fruit juice, fruit pulp, coffee, tea, milk and derivates, soy based drinks, natural extracts, chocolate based drinks or smoothies, with water and fruit juice being more preferred.

The liquid providing the matrix - in combination with the gelling agent - for the CO₂ of the product of the invention is preferably contained in an amount of 70.0 to 95.0 wt.-%, more preferred 80 to 90 wt.-%, with 85 to 88 wt.-% being most preferred.

A fruit and/or vegetable component is also added to the food product of the present invention to give the product a fresh taste. A fruit and/or vegetable component is selected from fruit/vegetable juice. In a preferred embodiment of the present invention, the food product contains 5.0 to 20.0 wt.-%, preferably 10 to 20 wt.-% of the fruit/vegetable component.

In principle, any fruit and/or vegetable can be used for the fruit/vegetable component. A preferred food product of the present invention is based on fruit concentrate as the fruit component.

The food product of the present invention is naturally carbonated, i.e. it contains CO₂ generated by a fermentation process that is well known in the field of food technology. Usually, a fermentation process producing CO₂ is based on the use of bacteria and yeast. The basic reaction underlying the fermentation process is the formation of CO₂ and alcohol (ethanol) from sugar such as glucose.

The food product of the present invention is fermented by yeast. Usually, any yeast suitable for fermentation of food products can be used, selected from the group consisting of hemiascetomycetous yeast species, Ascomycotina or Deuteromycotina. More preferably the yeast is selected from the group consisting of Debaryomyces, Kluyveromyces, Saccharomyces, Yarrowia, Zygosaccharomyces, Candida, Schizosaccharomyces and Rhodotorula, and most preferably the yeast is Kluyveromyces thermotolerans and/or Saccharomyces cerevisiae (baker's yeast). The yeast comprises live or dead cells. It can e envisaged to mix two or more types of yeast strains depending on the particular product properties, for instance depending on the organoleptic properties given by each yeast type.

The food product of the present invention is fermented such that the CO₂ content is in a range of 1.0 to 15 g/l, preferably 2.0 to 10.0 g/l. The quantity of CO₂ contained in the final product can be predetermined depending on which yeast type is used, and depending on the quantity of sugar which can be used by yeast cells for the fermentation process.

If appropriate, the carbonated, fermented food product of the present invention may also comprise up to 20 wt.-%, preferably 3.0 to 15.0, more preferred 3 to 6 wt.-% of a natural sugar or a fruit concentrate. The said natural sugar can be mixed with a high intensity sweetener. Examples of natural sugars are sucrose, saccharose, all type of syrup glucose or syrup fructose. Examples of high intensity sweeteners are aspartame, acesulfame, sucralose, saccharin, neotame, or natural extracts of stevia, or rebaudioside A. Mixtures of natural sugars and high intensity sweeteners, either natural or artificial, are appropriate because artificial sweeteners alone would not allow the yeast to produce a fermented product as required by the invention, so they cannot be used alone.

If desired, the food product of the present invention may also comprise up to 2.0 wt.-%, preferably 0.1 to 1.0 wt.-% of a flavoring agent. Usually, flavoring agent is one or a combination of food-grade flavoring agents used in soft-drinks applications which is selected from lemon flavor, orange flavor, raspberry flavor, cola flavor, banana flavor, coffee flavor or blackcurrant flavor.

The CO₂ is dissolved in the product of the invention during the fermentation of the fruit/vegetable component. In the yeast fermentation alcohol is also generated. The quantity of alcohol generated can be adjusted by the sugar content of the fruit/vegetable component. The adjustment of sweetness in the final food product can be achieved by adding artificial sweeteners as explained above. A typical carbonated, fermented product contains 0.5 to 2.0 wt.-%, more typically about 1.0 wt.-% of alcohol.

According to the present invention, the pH of the composition is in a range of 2.5 to 5.0. Preferably, the pH is in a range of 3 to 4.5, with a range of 3.5 to 4.0 being more preferred. Organic or inorganic acids can be added in order to adjust the pH to mentioned values if the pH product requires it.

In a preferred embodiment of the present invention, the food product may further comprise additives such as vitamins, minerals and/or probiotics.

The carbonated, fermented food product of the present invention can be a dessert, snack, carbonated product. Examples are carbonated products on the basis of water, flavored or not flavored with concentrates on the basis of fruits and/or vegetables.

The carbonated, fermented food product having a gel texture of the invention can be produced by a fermentation process using yeast. The process comprises the steps of mixing, heat treatment, yeast addition, non-isobaric filling and fermentation in containers.

In addition, a cooling phase to stop yeast development or a new heat treatment aiming to kill all the yeast for the product in the bottle are possible and would both be followed by a cooling phase. It depends if one want yeast alive or not in the final product. Having the yeast alive in the product would allow to have a healthy product containing beneficial ingredients as probiotics for example, whereas having dead yeast only will allow to have a shelf stable product.

In detail, one way of manufacturing the food products of the present invention is a process, as shown in **Figure 1** that comprises the following steps (reference signs on the drawings correspond to the process steps described hereafter):
1. Mixing
   The ingredients such as a gelling agent, a liquid and a fruit and/or vegetable component and optionally at least one of the sweeteners and flavoring agents are mixed with standard agitation in a conventional mixing machine. The temperature of this mixing stage is adjusted between 5 to 40°C.
2. Heat treatment
   Thereafter, a standard pasteurization of the above mixture is performed. The temperature is set at 85 to 140°C, preferably about 90°C during a period of 10 sec. to 2 min., preferably 15 to 25 seconds followed by a temperature decrease of 30 to 35°C.
3. Yeast addition
   The yeast is added to the product at a temperature of 30 to 35 °C, preferably about 32 °C with a minimum agitation to ensure proper mixing of the yeast/mixture product. In this stage, different types of yeast can be used so that the parameters will vary accordingly. It is also possible to use bacteria or a bacteria mixture for fermentation. The yeast is added in an amount of 10⁵ to 10¹⁰ cfu/g, preferably 10⁶ to 10⁸ cfu/g.
4. Filling
   The yeast containing product is then filled in containers under non-isobaric conditions by using a non-isobaric filler system. During this step acid can be added to adjust the pH to 2.5 to 5.0, if the product needed in order to produce a better jellification. Any food grade - organic or inorganic - acid may be used. In a preferred embodiment of the process of the invention, citric acid is added to the product. The acid is used in an amount of 0.01 to 1.0 wt.-%, preferable 0.1 to 0.5 wt.-%.
5. Fermentation
   The fermentation is performed during 15 to 50 hours, preferably 20 to 30 hours, more preferred about 25 hours at a temperature of 25 to 35 °C, preferably 28 to 33 °C, more preferred about 30 °C. The fermentation time as well as the fermentation temperature depend on the type of the yeast. The person skilled in the art will know what times and temperatures have to be used using a specific yeast strain.
6. Cooling and chilled storage. In addition, a new heat treatment of the product in the bottle in aim to kill all the yeast and a later cooling phase are possible. It depends if we want yeast alive or not in the final product.

To stop fermentation, the temperature is reduced by cooling down to a temperature of 10 °C to 4 °C, preferably about 8 °C. The product is sealed and stored at a temperature of between 4°C to 8°C for at least 45 days without losing gas under maintaining the gel texture.

In a preferred embodiment of the process of the present invention, a step of heating the product after fermentation is included. Usually, a short time heating at a temperature of about 90 °C is carried out. This reheating after fermentation is desirable when all of the living yeast in the product should be inactivated.

The step of filling the product in containers can be preferably carried out in an aseptic, isobaric or non-isobaric filler system.

The product of the present invention is filled up in suitable containers such as cans and cups made of glass, aluminium or plastic. Before fermentation - during the filling phase), the containers are air-tightly sealed according to standard procedures.

Examples of the ingredients for the product of the invention are mentioned above.

The process described provides a stable fermented, carbonated food product having a gel structure. The stable gel structure is achieved by the high dissolution of the gas in the gel matrix. The product remains stable in the container for at least 45 days in cooled environments of 2 to 12°C.

The present invention is illustrated below by means of the non-limiting example.

The following ingredients are mixed in the described proportions:

| **Ingredients** | **%** |
|---|---|
| Water | 86,00% |
| Carrageenan | 0,30% |
| Guar | 0,05% |
| Fruit concentrate | 12,0% |

The ingredients are mixed with standard agitation at a temperature of about 30°C.

After mixing, a standard pasteurization at a temperature of 92°C during about 20 seconds is performed followed by a temperature decrease of about 32°C.

Thereafter, 10⁶ and 10⁷ cfu/g of *Kluyveromyces Thermotolerans* yeast is added to the product mixture at a temperature of about 32 °C by gently stirring the mixture to ensure a good mixing of the yeast containing product.

The yeast containing product is filled through a non-isobaric filler system in suitable containers - PET containers were used but others type of containers could apply.

The fermentation is then performed during 24 hours at a temperature of 30 °C.

After fermentation the product is cooled down to a temperature of 6 °C. The containers were previously sealed, and then, after fermentation, they are stored in a cooled environment at a temperature of 5 °C. The product contains about 1.0% of ethanol.

The product has been tasted and found to be a fruity refreshing dessert which exhibits a pleasant mousse texture and mouth-feel when consumed.

Interestingly, the aspect of the product is almost still when contained in the container, but once poured into a glass or cup for consumption, its volume increases a lot, typically the ratio between the volume when expanded and the volume when contained into the closed container is comprised between 2:1 to 10:1. The expanded product is then very nice and fresh to consume.

As can be understood from the foregoing description, the present invention provides a particularly interesting fermented gel product, which can be consumed in different manners, depending on the gel texture and viscosity, wherein the yeast provides a fine gaseous structure entrapped in the gel matrix, so that once the product that was primarily contained in a closed container is put under some mechanical constraint such as a pouring action, the gas entrapped in the gel matrix is released and expands into the gel matrix such as to form a product having a foamy texture with increased volume. This last aspect is particularly interesting and surprising. The volume increase provides an attractive product to the consumer, which creates a new approach to food consumption.

It will finally be noted that the product volume increase effect is obtained when the product initial viscosity is not too high, typically for viscosities comprised between 100 and 10000 mPa.s.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A carbonated, yeast-fermented food product having a gel texture comprising a liquid, a gelling agent selected from pectin, carrageenan, guar, agar, caroub, gelatin and mixtures thereof and a fruit and/or vegetable component.

2. The food product according to claim 1, comprising 0.1 to 5.0 wt.-%, preferably 0.5 to 2.5 wt.-% of the gelling agent, 70.0 to 95.0 wt.-%, preferably 80 to 90 wt.-% of the liquid and 5.0 to 20.0 wt.-%, preferably 10 to 20 wt.-% of the fruit and/or vegetable component.

3. The food product according to claim 1 wherein the yeast is selected from Kluyveromyces thermotolerans and Saccharomyces cerevisae.

4. The food product according to any one of claims 1 to 3, which is fermented by at least one yeast and comprises the yeast in a concentration of 10⁵ to 10¹⁰ cfu/g.

5. The food product according to any one of claims 1 to 4 wherein the liquid is selected from water, fruit juice, fruit pulp, coffee, tea, milk and derivates, soy based drinks, natural extracts, chocolate based drinks or smoothies.

6. The food product according to any one of claims 1 to 5 wherein the fruit component is fruit juice, fruit concentrate or fruit puree.

7. The food product according to any one of claims 1 to 6 further comprising up to 20 wt.-%, preferably 3.0 to 15.0 wt.-% of a sweetener.

8. The food product according to claim 7 wherein the sweetener is selected from natural sugars selected from saccharose, all type of syrup glucose or syrup fructose or natural extracts like stevia or rebaudioside A, and artificial sweeteners selected from aspartame, acesulfame, sucralose, saccharin, neotame, and mixtures thereof.

9. The food product according to any one of claims 1 to 8 further comprising up to 2.0 wt.-%, preferably 0.1 to 1.0 wt.-% of a flavoring agent.

10. The food product according to any one of claims 1 to 9 wherein the CO₂ content is in a range of 1.0 to 10 g/l, preferably 2.0 to 5.0 g/l.

11. The food product according to any one of claims 1 to 10 further comprising additives selected from vitamins, minerals, probiotics and mixtures thereof.

12. A process for the preparation of a carbonated, fermented food product having a gel texture comprising the steps of:
(i) mixing a gelling agent, a liquid and a fruit and/or vegetable component and optionally at least one of sweeteners and flavoring agents;
(ii) pasteurizing the mixture;
(iii) adding yeast in an amount of 10⁵ to 10¹⁰ cfu/g to prepare a yeast containing product;
(iv) filling the product in containers under non isobaric conditions;
(v) adding 0.01 to 1.0 wt.-%, preferably 0.1 to 0.5 wt.-% of an acid to the product;
(vi) carrying out a fermentation;
(vii) cooling down the product to a temperature in the range of 10 °C to 4 °C, preferably 8 °C to 5 °C.

13. The process according to claim 12 further comprising the step of heating the product after fermentation.

14. The process according to claim(s) 12 and/or 13 wherein the filling of the product in containers is carried out in an aseptic, isobaric or non isobaric filler system.
